# FASCICULE DE BREVET EUROPEEN

(11) **EP 3 191 332 B1**
(45) Date de publication et mention de la délivrance du brevet: **04.07.2018**
(21) Numéro de dépôt: 15778356.4
(22) Date de dépôt: 08.09.2015
(51) Int. Cl.: B60J 5/04

(54) **PROCÉDÉ DE FABRICATION D'UNE PORTE LATÉRALE DE VÉHICULE AUTOMOBILE**
HERSTELLUNGSVERFAHREN FÜR EINE FAHRZEUGSEITENTÜR
METHOD FOR PRODUCING A VEHICLE SIDE DOOR

(30) Priorité: 12.09.2014 FR 1458567
(43) Date de publication de la demande: 19.07.2017
(73) Titulaire: Renault s.a.s., 92100 Boulogne-Billancourt (FR)
(72) Inventeur: GALINEAU, Fabien, F-78280 Guyancourt (FR)
(86) Numéro de dépôt international: PCT/FR2015/052378
(87) Numéro de publication internationale: WO 2016/038292

(56) Documents cités:
- WO-A1-2010/063915
- FR-A1- 2 986 491
- JP-A- H11 291 762
- US-A- 2 946 622

## Description

La présente invention a pour objet un procédé de fabrication d'une porte de véhicule dite mixte, munie d'un enjoliveur, en particulier d'une porte latérale mixte. Elle a également pour objet une porte latérale de véhicule automobile et un véhicule automobile munie d'une telle porte.

Il existe différents types de portes de véhicule automobile. Ainsi, dans les portes dites autoclaves, les pièces en tôle s'étendent jusqu'en haut de la vitre. Dans les portes dites mixtes, les pièces en tôle s'étendent au-dessus de la ligne de ceinture de caisse, mais ne sont pas apparentes de l'extérieur lorsque la porte est fermée. En effet, dans les portes mixtes, au moins une partie du cadre entourant la vitre, en général le montant du cadre, peut être revêtue, pour des raisons esthétiques, d'un enjoliveur comme cela est décrit dans le document FR 2 986 491 A, ou d'un revêtement appelé « stripping » en langue anglaise. Le stripping est typiquement un adhésif noir, mat ou brillant.

On connaît différents exemples de portes mixtes.

Dans un premier type de porte mixte, l'enjoliveur est disposé sur un cadre multi-pièce lors de l'assemblage de la tôlerie, avant la mise en peinture de la carrosserie, et forme un panneau extérieur supérieur. L'enjoliveur forme avec le guide-vitre et le caisson un corps creux par soudage et sertissage de ces trois pièces lors de l'assemblage de la tôlerie. Un stripping est prévu pour habiller l'enjoliveur.

Ce type de porte a pour inconvénient de nécessiter le dépôt d'un stripping et de provoquer des entrées favorisant la diffusion de bruits aux zones de liaison des pièces tôles constituant le cadre multi-pièces.

Dans un deuxième type de porte mixte, l'enjoliveur est une pièce unique en tôle qui est installée lors de l'étape finale du montage, après l'étape de mise en peinture de la carrosserie, au cours d'un assemblage non soudé. La fixation de l'enjoliveur est ainsi réalisée par vissage sur un cadre mono-pièce. Le cadre est également appelé « renfort de cadre » car il vient renforcer la zone fenêtre du caisson de porte.

Cette porte est toutefois de fabrication onéreuse car l'enjoliveur est installé lors du montage et est peint chez le fournisseur.

Enfin, on connaît une porte mixte dans laquelle l'enjoliveur est réalisé en matière plastique, par exemple en poly(méthacrylate de méthyle). L'enjoliveur est fixé par vissage lors de l'étape de montage, après l'étape de mise en peinture de la carrosserie, sur un cadre mono-pièce et sur le caisson.

Cette solution a pour inconvénient qu'on rajoute du temps à la mise en montage et que la mise en peinture de l'enjoliveur est réalisée chez le fournisseur.

La présente invention vise à remédier à ces inconvénients.

L'invention a ainsi pour objet un procédé de fabrication d'une porte latérale de véhicule automobile, ladite porte comprenant un cadre de vitre et un enjoliveur métallique.

Le procédé selon l'invention comprend : a) une étape de fixation d'un enjoliveur métallique sur un montant d'un cadre de vitre mono-pièce, l'enjoliveur étant serti à une de ses extrémités latérales sur le montant du cadre et soudé à son autre extrémité latérale sur le montant du cadre, suivie b) d'une étape de mise en peinture de la porte, typiquement lors de la mise en peinture de la carrosserie.

On évite ainsi l'inconvénient traditionnel des cadres mono-pièce pour lesquels on avait nécessairement un enjoliveur rapporté vissé. On retrouve ainsi la même configuration qu'une porte autoclave, l'enjoliveur mis avant la peinture de la carrosserie permettant une montée en gamme par l'ajout d'un stripping ou non.

L'enjoliveur peut également être serti, à son extrémité sur laquelle l'enjoliveur est serti sur le montant du cadre, sur un caisson inférieur qui supporte le cadre.

L'enjoliveur comprend typiquement un guide-vitre.

L'enjoliveur peut être en une seule pièce, ou en deux pièces dont une pièce enjoliveur et une pièce guide-vitre fixée à la pièce enjoliveur.

L'enjoliveur peut être recouvert d'un revêtement.

Le revêtement peut être un adhésif noir.

L'enjoliveur peut être en tôle métallique.

Le cadre de vitre est avantageusement dépourvu de trous.

L'invention a également pour objet une porte latérale de véhicule automobile, pouvant en particulier être obtenue par le procédé décrit ci-dessus.

La porte latérale selon l'invention comprend un cadre de vitre mono-pièce et un enjoliveur métallique fixé sur un montant du cadre de vitre, l'enjoliveur étant serti à une de ses extrémités latérales sur le montant du cadre et soudé à son autre extrémité latérale sur le montant du cadre. La porte selon l'invention a pour avantage d'être rigide.

L'invention a enfin pour objet un véhicule automobile comprenant une porte latérale décrite ci-dessus.

D'autres caractéristiques et avantages de la présente invention apparaîtront plus clairement à la lecture de la description suivante donnée à titre d'exemple illustratif et faite en référence aux dessins annexés, sur lesquels :
- la figure 1 est une vue générale en perspective d'une porte latérale de véhicule automobile selon l'invention,
- la figure 2 est une vue partielle en coupe horizontale de la porte, conformément à un premier mode de réalisation,
- la figure 3 est une vue partielle en coupe horizontale de la porte, conformément à un deuxième mode de réalisation, et
- la figure 4 est une vue partielle en coupe horizontale de la porte, conformément à un troisième mode de réalisation.

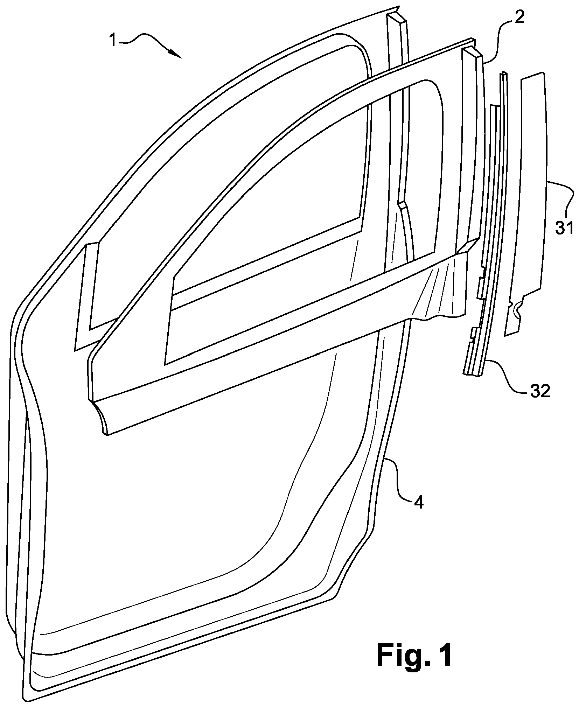

Telle qu'illustrée à la figure 1, une porte latérale 1 de véhicule automobile selon l'invention comprend un cadre de vitre 2 destiné à encadrer et maintenir la vitre de la porte latérale 1, et un enjoliveur 3 disposé sur le montant vertical extérieur du cadre de vitre 2. Un caisson inférieur 4 supporte le cadre de vitre 2.

L'enjoliveur 3 est une pièce en tôle qui est soudée et sertie sur le cadre de vitre 2. La soudure et le sertissage sont réalisés avant la peinture de l'enjoliveur 3. Le cadre de vitre 2 est avantageusement un cadre aéroacoustique mono-pièce. Le cadre aéroacoustique 2 est dépourvu de trous, pour éviter des entrées d'air et de bruit.

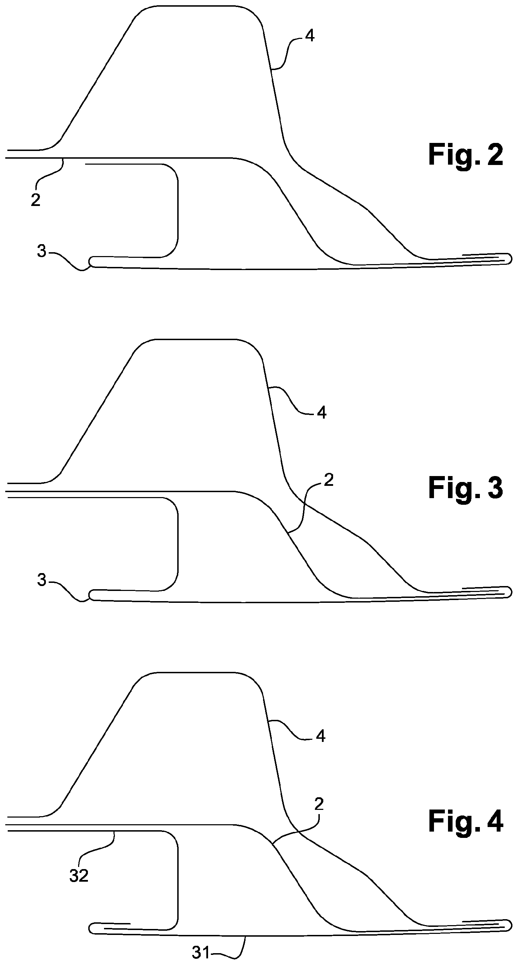

Les figures 2 et 3 illustrent en section transversale différents modes de réalisation de la fixation de l'enjoliveur 3. Dans un premier mode de réalisation, tel qu'illustré à la figure 2, l'enjoliveur 3 est soudé à une de ses extrémités latérales (à gauche de la figure 2) sur le cadre de vitre 2. A son autre extrémité latérale (à droite de la figure 2), l'enjoliveur 3 est serti sur le cadre de vitre 2, et éventuellement sur le caisson inférieur 4.

Dans un deuxième mode de réalisation, tel qu'illustré à la figure 3, l'enjoliveur 3 est soudé à une de ses extrémités latérales sur le cadre de vitre 2 et sur le caisson inférieur 4. L'extrémité de l'enjoliveur 3 est ainsi prolongée jusqu'aux bords conjoints du cadre de vitre 2 et du caisson inférieur 4. A son autre extrémité latérale, l'enjoliveur 3, est serti sur le cadre de vitre 2, et éventuellement sur le caisson inférieur 4.

Dans les deux premiers modes de réalisation, l'enjoliveur 3 est en une seule pièce. Il comprend une partie enjoliveur proprement dite, qui est sertie sur le cadre de vitre 2, et une partie guide-vitre en forme de U permettant de guider la vitre lors de son coulissement vertical, la partie guide-vitre étant soudée sur la cadre de vite 2.

Dans un troisième mode de réalisation, tel qu'illustré à la figure 4, sur une porte avant, l'enjoliveur 3 est en deux pièces distinctes. Il comprend une pièce enjoliveur 31 proprement dite et une pièce guide-vitre 32. La pièce enjoliveur 31 et la pièce guide-vitre 32 peuvent être fixées par clipsage, tel que représenté sur la figure 4. On peut néanmoins envisager tout autre mode de fixation, tel qu'une soudure ou une fixation par vissage.

Dans tous les modes de réalisation, on peut prévoir un stripping d'habillage de l'enjoliveur ou laisser ce dernier tel quel, avec sa peinture apparente.

L'enjoliveur peut être obtenu par profilage puis pliage. Il peut également être obtenu par profilage, emboutissage puis pliage.

L'enjoliveur est posé lors de l'assemblage de la tôlerie, avant la mise en peinture de la carrosserie, et donc de l'enjoliveur. Ceci permet une montée en gamme plus flexible. Le panneau inférieur recouvrant le caisson de porte, qui a un certain coloris, peut ainsi être coordonné facilement avec le coloris du panneau supérieur (l'enjoliveur), selon que l'on met ou non un stripping ou qu'on laisse la surface peinte apparente.

## Revendications

1. Procédé de fabrication d'une porte latérale (1) de véhicule automobile, ladite porte (1) comprenant un cadre de vitre (2) et un enjoliveur métallique (3), **caractérisé en ce qu'**il comprend : a) une étape de fixation d'un enjoliveur métallique (3) sur un montant d'un cadre de vitre (2) mono-pièce, l'enjoliveur (3) étant serti à une de ses extrémités latérales sur le montant du cadre (2) et soudé à son autre extrémité latérale sur le montant du cadre (2), suivie b) d'une étape de mise en peinture de la porte (1).

2. Précédé selon la revendication 1, **caractérisée en ce que** l'enjoliveur (3) est également serti, à son extrémité sur laquelle l'enjoliveur (3) est serti sur le montant du cadre (2), sur un caisson inférieur (4) qui supporte le cadre (2).

3. Procédé selon la revendication 1 ou 2, **caractérisé en ce que** l'enjoliveur (3) comprend un guide-vitre (32).

4. Procédé selon la revendication 3, **caractérisé en ce que** l'enjoliveur (3) est en une seule pièce, ou en deux pièces dont une pièce enjoliveur (31) et une pièce guide-vitre (32) fixée à la pièce enjoliveur (31).

5. Procédé selon l'une des revendications 1 à 4, **caractérisé en ce que** l'enjoliveur (3) est recouvert d'un revêtement.

6. Procédé selon la revendication 5, **caractérisé en ce que** le revêtement est un adhésif noir.

7. Procédé selon l'une des revendications 1 à 6, **caractérisé en ce que** l'enjoliveur (3) est en tôle métallique.

8. Procédé selon l'une des revendications 1 à 7, **caractérisé en ce que** le cadre de vitre (2) est dépourvu de trous.

9. Porte latérale (1) de véhicule automobile, comprenant un cadre de vitre (2) mono-pièce et un enjoliveur métallique (3) fixé sur un montant du cadre de vitre, **caractérisée en ce que** l'enjoliveur (3) étant serti à une de ses extrémités latérales sur le montant du cadre (2) et soudé à son autre extrémité latérale sur le montant du cadre (2).

10. Véhicule automobile, **caractérisé en ce qu'**il comprend une porte latérale (1) selon la revendication 9.

## Patentansprüche

1. Verfahren zur Herstellung einer Seitentür (1) eines Kraftfahrzeugs, umfassend einen Fensterrahmen (2) und eine metallische Zierleiste (3), **dadurch gekennzeichnet, dass** es umfasst: a) einen Schritt der Befestigung einer metallischen Zierleiste (3) auf einem Steher eines einstückigen Fensterrahmens (2), wobei die Zierleiste (3) an einem ihrer seitlichen Enden auf in Steher des Rahmens (2) eingelassen und an ihrem anderen seitlichen Ende auf den Steher des Rahmens (2) geschweißt ist, gefolgt b) von einem Schritt des Lackierens der Tür (1).

2. Verfahren nach Anspruch 1, **dadurch gekennzeichnet, dass** die Zierleiste (3) an ihrem Ende, an dem die Zierleiste (3) in den Steher des Rahmens (2) eingelassen ist, auch in einen unteren Kasten (4), der den Rahmen (2) trägt, eingelassen ist.

3. Verfahren nach Anspruch 1 oder 2, **dadurch gekennzeichnet, dass** die Zierleiste (3) eine Scheibenführung (32) umfasst.

4. Verfahren nach Anspruch 3, **dadurch gekennzeichnet, dass** die Zierleiste (3) aus einem Stück oder aus zwei Stücken ist, einem Zierleistenstück (31) und einem Fensterführungsstück (32), das am Zierleistenstück (31) befestigt ist.

5. Verfahren nach einem der Ansprüche 1 bis 4, **dadurch gekennzeichnet, dass** die Zierleiste (3) mit einer Verkleidung verkleidet ist.

6. Verfahren nach Anspruch 5, **dadurch gekennzeichnet, dass** die Verkleidung ein schwarzes Klebeband ist.

7. Verfahren nach einem der Ansprüche 1 bis 6, **dadurch gekennzeichnet, dass** die Zierleiste (3) aus metallischem Blech ist.

8. Verfahren nach einem der Ansprüche 1 bis 7, **dadurch gekennzeichnet, dass** der Fensterrahmen (2) keine Löcher besitzt.

9. Seitentür (1) eines Kraftfahrzeugs, umfassend einen einstückigen Fensterrahmen (2) und eine metallische Zierleiste (3), die auf einem Steher des Fensterrahmens befestigt ist, **dadurch gekennzeichnet, dass** die Zierleiste (3) an einem ihrer seitlichen Enden in den Steher des Rahmens (2) eingelassen wird und an ihrem anderen seitlichen Ende auf den Steher des Rahmens (2) geschweißt ist.

10. Kraftfahrzeug, **dadurch gekennzeichnet, dass** es eine Seitentür (1) nach Anspruch 9 umfasst.

## Claims

1. Method for producing a motor vehicle side door (1), said door (1) comprising a window frame (2) and a metal trim (3), **characterized in that** it comprises: a) a step of attaching a metal trim (3) to a post of a one-piece window frame (2), the trim (3) being crimped at one of the lateral ends of same to the post of the frame (2) and welded at the other lateral end of same to the post of the frame (2), followed by b) a step of painting the door (1).

2. Method according to Claim 1, **characterized in that** the trim (3) is also crimped, at the end of same by which the trim (3) is crimped to the post of the frame (2), to a lower shell (4) that supports the frame (2).

3. Method according to Claim 1 or 2, **characterized in that** the trim (3) includes a window run channel (32).

4. Method according to Claim 3, **characterized in that** the trim (3) comprises a single part or two parts, specifically a trim part (31) and a window run channel part (32) attached to the trim part (31).

5. Method according to one of Claims 1 to 4, **characterized in that** the trim (3) is covered with a covering.

6. Method according to Claim 5, **characterized in that** the covering is a black sticker.

7. Method according to one of Claims 1 to 6, **characterized in that** the trim (3) is made of metal sheet.

8. Method according to one of Claims 1 to 7, **characterized in that** the window frame (2) has no holes.

9. Motor vehicle side door (1), comprising a one-piece window frame (2) and a metal trim (3) attached to a post of the window frame, **characterized in that** the trim (3) being crimped at one of the lateral ends of same to the post of the frame (2) and welded at the other lateral end of same to the post of the frame (2).

10. Motor vehicle, **characterized in that** it includes a side door (1) according to Claim 9.
